# EUROPEAN PATENT SPECIFICATION

(11) **EP 3 741 220 B1**
(45) Date of publication and mention of the grant of the patent: **28.12.2022**
(21) Application number: 19814704.3
(22) Date of filing: 30.05.2019
(51) Int. Cl.: A23L 7/143, A23L 7/17, A23L 7/191, A23L 19/15, A23L 33/125, A23L 33/12, A23L 33/21, A23L 7/10, A23L 29/10, A23L 29/256, A23L 33/10, A23L 33/14

(54) **POTATO-BASED NUTRITIONAL RECOMBINANT RICE FORMULA AND PREPARATION METHOD THEREFOR**
KARTOFFELBASIERTE REKOMBINANTE REISNAHRUNGSREZEPTUR UND HERSTELLUNGSVERFAHREN DAFÜR
FORMULE DE RIZ RECONSTITUÉ NUTRITIONNEL À BASE DE POMME DE TERRE ET PROCÉDÉ DE PRÉPARATION ASSOCIÉ

(30) Priority: 06.06.2018 CN 201810587048
(43) Date of publication of application: 25.11.2020
(73) Proprietor: Shenyang Normal University, Shenyang City, Liaoning 110034 (CN)
(72) Inventor: XIAO, Zhigang, Shenyang City, Liaoning 110034 (CN); YANG, Qingyu, Shenyang City, Liaoning 110034 (CN); WANG, Lishuang, Shenyang City, Liaoning 110034 (CN); DUAN, Yumin, Shenyang City, Liaoning 110034 (CN); TAO, Liwei, Shenyang City, Liaoning 110034 (CN); WANG, Na, Shenyang City, Liaoning 110034 (CN); SHEN, Yuguang, Shenyang City, Liaoning 110034 (CN); WANG, Peng, Shenyang City, Liaoning 110034 (CN)
(74) Representative: Studio Torta S.p.A.
(86) International application number: PCT/CN2019/089319
(87) International publication number: WO 2019/233336

(56) References cited:
- CN-A- 104 273 432
- CN-A- 104 273 473
- CN-A- 105 360 961
- CN-A- 107 509 958
- CN-A- 107 509 958
- CN-A- 107 647 283
- CN-A- 107 647 283
- CN-A- 107 927 734
- CN-A- 107 997 002
- CN-A- 108 740 781

## Description

### TECHNICAL FIELD

The present disclosure relates to the field of food deep processing, and in particular, to a potato-based nutritional artificial rice formula and a preparation method thereof.

### BACKGROUND

At present, rice and wheaten food are the staple food products in China, which have limited nutritional compositions and incomplete nutrition. If merely the rice is adopted as the staple food, intake of nutritional components is insufficient, which belongs to an unscientific dietary behavior. According to a result of a National Residents' Nutrition and Health Survey (2010-2012), rates of overweight and obesity caused by irrational diets have increased by 7.3 and 4.8 percentage points respectively compared with those in a decade ago, and a rate of chronic diseases such as hypertension and diabetes has been obviously increased. In recent years, there are major breakthroughs in terms of the research and development of many potato products that uses the potatoes as the staple food as well as innovations in processing technology, and many staple food products such as potato buns, potato noodles, instant potato powder, and potato cakes have been successfully developed, which have enriched China's existing staple food market demand and also satisfied the country's development needs. However, the potato whole powder-based artificial rice is still blank in this field.

The potato whole powder contains a variety of nutrients such as starch, protein, sugar, fat, fiber, ash, vitamins, minerals and the like. Resistant starch granules contained in the potato have a high anti-digestive property to α-amylase. The potato also has low calories, and includes proteins having a variety of essential amino acids necessary for the human bodies, and contains high content of dietary fiber. The above characteristics of potato are not only conducive to technical operations but also conducive to food production, in order to satisfy new demands and new expectations on staple food consumption in modern life.

Yeast β-glucan is an immune polysaccharide isolated from a yeast cell wall, and a main structure thereof is β-1-3-D glucan and β-1-6 glucan. The yeast β-glucan is environmentally friendly, safe, non-toxic, and also has immune activity, which can induce the body to produce cellular immunity and humoral immunity, thereby effectively enhancing the body's immunity and having anti-tumor and anti-infective activities. The experimental results of studies conducted domestically and abroad indicate that the yeast β-glucan has a unique triple helix structure and has immunomodulatory activity, and the yeast β-glucan is such difficult to be digested and absorbed in human digestive organs that it can be used as a prebiotic to regulate the intestinal flora structure and the like. In accordance with No. 9 Announcement of the National Ministry of Health (2010), the yeast β-glucan has been approved to be used as a new food resource, and recommended dosage thereof is smaller than or equal to 250mg/day.

Sodium alginate can prevent cardiovascular diseases and reduce obesity, etc. The sodium alginate is indispensable nutrient (edible fiber) for the human bodies, and it has an auxiliary curative effect on preventing colon cancer, cardiovascular disease, obesity, and accumulation of lead and tin in the body. The sodium alginate, as one kind of seaweed gum, can improve the properties and structures of food when being added to food, and has characteristics of low heat, non-toxic, easy swelling, high flexibility, etc. The sodium alginate has the functions of coagulation, adjustment, emulsification, suspension, stabilization and preventing food from being dried. The most important function thereof is gelation, allowing it to form edible gels, which is similar to solids for maintaining a formation shape.

Chinese invention patent (application publication number: CN104286838A, published on January 21, 2015) discloses a cordyceps sinensis-based and cordycepin-rich artificial rice and a preparation method thereof, and specifically discloses: cordyceps militaris medium is superfine grinded to 40 microns or less (which can pass through a 400-mesh sieve), the grinded cordyceps militaris medium, rice powder and gluten powder, which are grinded to 180 microns or less (passing through an 80-mesh sieve), are mixed according to the following mass percentages: 20% -50% of the cordyceps militaris powder, 5%-10% of the gluten powder, 10% -30% of water based on a total mass to the mixture is further mixed to temper, after the tempering, the mixture is extruded and molded with a twin-screw, then subjected to cuting and granulating, radio frequency drying, and cooling to obtain the cordyceps sinensis-based artificial rice.

Chinese invention patent (application publication number: CN105707703A, published on June 29, 2016) discloses a low protein artificial rice and a manufacturing method thereof, and specifically discloses that the artificial rice consists of, by mass percentage, 38.0-46.0% of rice powder, 51.5-58.95% of auxiliary material powder, 2.50-3.05% of compound improver. These raw materials are mixed and stirred, squeezed, cooked, and dried through fluidized bed to obtain artificial rice. The artificial has a low protein content, under traditional Chinese medical cognition, it includes kidney-beneficial ingredients such as pumpkin powder, sweet potato powder and yam powder. In addition, by adding modifiers such as emulsifiers, moisture retention agents, hydrophilic colloids and modified starch into the raw material powder, the artificial rice has a grain shape similar to that of the raw rice, a tight texture, and is smooth and complete.

Chinese invention patent (application publication number: CN106942583A, published on July 14, 2017) discloses an artificial rice based upon celery-contained rice and a production method thereof, and specifically discloses that 94-98 parts of rice are grinded into powder and 2-6 parts of celery are squeezed to juice, and then steps of mixing and tempering, extruding and molding and drying and the like are performed. The celery in the form of nutrient juice is directly mixed with the rice powder without additionally adding water, which is easy to prepare and retains the nutritional functional ingredients of the product to the greatest extent.

The artificial rice according to the above patent applications has the disadvantages such as relatively less resistant starch, low digestion resistance, poor anti-regeneration performance, short shelf life. The method according to the present disclosure can greatly eliminate the disadvantages of the above artificial rice, and the potatoes can be applied to a broader range, which enriches the potato products. Compared with the conventional artificial rice, the potato-based artificial rice prepared by the present method improves defects of the conventional artificial rice such as a low component of the resistance starch, limited compositions, and incomplete nutrients and the like. The resistant starch granules contained in the potatoes have a high degree of anti-digestibility to a-amylase, such that the shelf life of rice can be effectively prolonged. In addition, yeast β-glucan, sucrose ester, and sodium alginate are added to effectively improve body immunity, and a washing step can be eliminated to simplify the cooking thereof.

At present, people are putting higher value on dietary health. Rice can merely provide limited nutritional components and functional characteristics. With the fast pace of life in modern society, staple foods with different nutrition combinations have become a mainstream of consumption, and the consumers are in favor of simple, convenient, nutritious and safe foods, which can supplement energy and improve the immunity of the body by intaking a small amount of nutrients. The current manufacturing processes of most artificial rice are complicated, some nutritional ingredients added into the artificial rice are repetitious, and the process defects may easily result in serious loss of nutritional ingredients and a short shelf life.

Prior art document CN104273432A discloses that a processing method of nutritional potato mixed rice.

### SUMMARY

The present disclosure discloses a potato-based nutritional artificial rice formula and a preparation method thereof, in order to obtain a potato-based nutritional artificial rice with comprehensive nutrients and an anti-regeneration property. By adding sucrose ester, sodium alginate and yeast β-glucan to regulate a texture of the artificial rice, the artificial rice with better anti-regeneration property, comprehensive nutrients and excellent texture is obtained.

The present disclosure discloses a potato-based nutritional artificial rice formula and a preparation method thereof, and the artificial rice formula includes: 70-90% of rice powder; 10-30% of potato whole powder; 0.1-1% of sucrose ester; 0.01- 0.1% of yeast β-glucan; and 0.1% -1% of sodium alginate, as a percentage of the total weight of the material.

The potatoes and the rice are pre-cured by using double pre-curing technology, a viscosity of the potato whole powder is decreases, the processing performance of the rice and the potatoes are effectively improved, and the addition of the sucrose ester, the yeast β-glucan and the sodium alginate can improve the texture, color and luster of the artificial rice. The mixture material, after subjected to granulation molding, is sprayed with 1% sodium alginate with a surface sprayer, to make the surface of the artificial rice smoother, and make the color and taste similar to the conventional rice. After the drying and spraying, the potato-based nutritional artificial rice is obtained.

The present disclosure also discloses a preparation method of the potato-based nutritional artificial rice, the potato-based nutritional artificial rice having the potato-based nutritional artificial rice formula as described above, the preparation method including following steps:
(1) sequentially pre-treating, crushing, sieving, and pre-curing rice;
(2) sequentially pre-treating, crushing, sieving, and pre-curing potatoes;
(3) tempering the pre-cured rice and potatoes with sodium alginate, sucrose ester and yeast β-glucan, to obtain tempered mixture powder; and
(4) sequentially granulation molding, spraying, drying, and finally packaging the tempered mixture powder.

Preferably, (1) pretreatment of the rice: processing the rice by washing, removing impurities and soaking, weighing the processed rice and soaking at room temperature for 0.5h to 4h, drying and crushing the soaked rice, and sieving through an 80-100 mesh sieve to obtain rice powder;
(2) pretreatment of the potatoes: processing the potatoes by peeling, beating, and drying, then crushing the processed potatoes and sieving through an 80-150 mesh sieve to obtain potato whole powder;
(3) pre-curing of raw materials: pre-curing the rice powder and the potato whole powder that are obtained by the pre-treatments;
(4) tempering: adding the pre-cured rice powder and potato whole powder into a mixer to obtain mixture powder; adding sodium alginate, sucrose ester and yeast β-glucan, and tempering the mixture powder by adding distilled water to obtain a mixture material, adjusting a water content of the mixture material to 20-40%;
(5) granulation molding: feeding the tempered mixture material into a twin-screw extruder via a feeder, wherein the twin-screw extruder has five heating sections, a screw of the twin-screw extruder has a length-to-diameter ratio of 16:1-28:1, working temperatures of cavities of respective sections of the twin-screw extruder are as follows: 50-70°C in a section I, 80-100°C in a section II, 120-140°C in a section III, 110-120°C in a section IV, and 25-40°C in a section V, a rotation speed of the screw is 200-300 rpm; conveying, extruding, and curing the mixture material through the twin-screw extruder to form gel granules, and extruding and molding the gel granules through a die having a circular molding hole diameter of 1-6 mm, to obtain artificial rice preliminarily;
(6) spraying: spraying sodium alginate on surfaces of the artificial rice at an exit of the extruder;
(7) aging and drying: drying the cut and molded artificial rice at 25°C under natural condition, to adjust the water content of the artificial rice to 8-15%; and
(8) packaging: weighing and packaging the dried and polished artificial rice.

After the rice is extruded and pre-cured at low temperature, the content of resistant starch in the rice starch increases, and various components of the rice are fully exposed, which is beneficial to the granulation molding step. The pre-curing includes following steps.

The pre-curing of the rice is performed by placing rice powder into a twin-screw extruder and adopting a low-temperature extrusion method, wherein working temperatures of cavities of respective sections of the twin-screw extruder are: 30-40°C in a section I, 40-50°C in a section II, 50-60°C in a section III, 60-70°C in a section IV, and 70-80°C in a section V, a rotation speed is 200-300 rpm, and wherein a water content of the rice powder is in a range of 25-45%.

The pre-curing the potatoes is performed by cooking whole potato powder at a low temperature, wherein the low-temperature of the cooking is 35-60°C, and a cooking time is 1-15min.

The potato whole powder has a reduced viscosity after being pretreated by cooking, and the potato whole powder in a low gelatinized state is conducive to the granulation molding of the artificial rice.

In the step (4), the sucrose ester, the yeast β-glucan, and the sodium alginate are added in the following ratios: the sucrose ester 0.1-1%, the yeast β-glucan 0.01-0.1%, and the sodium alginate 0.1% -1%.

In the step (6), a mass fraction of the sodium alginate used for spraying is 1-10%, and an amount used for spraying is 20%- 40% of a total material weight. The spraying process can improve the color and luster of the nutritional artificial rice, and increase brightness of the nutritional artificial rice. Therefore, the nutritional and anti-regeneration characteristics of the artificial rice prepared by the present method are significantly improved.

The present disclosure brings the following beneficial effects.

The present disclosure provides a potato-based nutritional artificial rice formula and a preparation method thereof, in which the rice powder and the potato whole powder are pretreated with double pre-curing technology (low-temperature extrusion and low-temperature cooking), respectively. The pre-cured rice powder and potato whole powder can retain their nutrients to the greatest extent, and the texture characteristics of the potatoes and the rice can be improved. The addition of sucrose ester, yeast β-glucan and sodium alginate can improve the texture and nutritional characteristics of the nutritional artificial rice and improve the anti-regeneration characteristics of the artificial rice, such that a shelf life of the artificial rice is effectively prolonged, and surface smoothness, color, and luster of the rice are very close to that of natural rice. This present disclosure provides a good theoretical and technical foundation for the realization of using potatoes as staple food and a new path of potato food industry chain development.

### BRIEF DESCRIPTION OF DRAWINGS

The present disclosure is further described below with reference to drawings.
FIG. 1 illustrates a potato-based nutritional artificial rice formula and a process flow chart of a preparation method thereof according to the present disclosure;
FIG. 2 illustrates X-ray diffraction patterns of rice and potato-based nutritional artificial rice according to an embodiment of the present disclosure;
FIG. 3 illustrates a scanning electron microscope image of potato-based nutritional artificial rice according to an embodiment of the present disclosure.

### DESCRIPTION OF EMBODIMENTS

Hereinafter, specific embodiments of the present disclosure will be described in detail with reference to the drawings.

In order to clarify the purposes, technical solutions, and advantages of the present disclosure, the present disclosure will be described in detail below in connection with the embodiments. It should be understood that the specific embodiments described herein are only intended to elaborate, but not to limit the present disclosure.

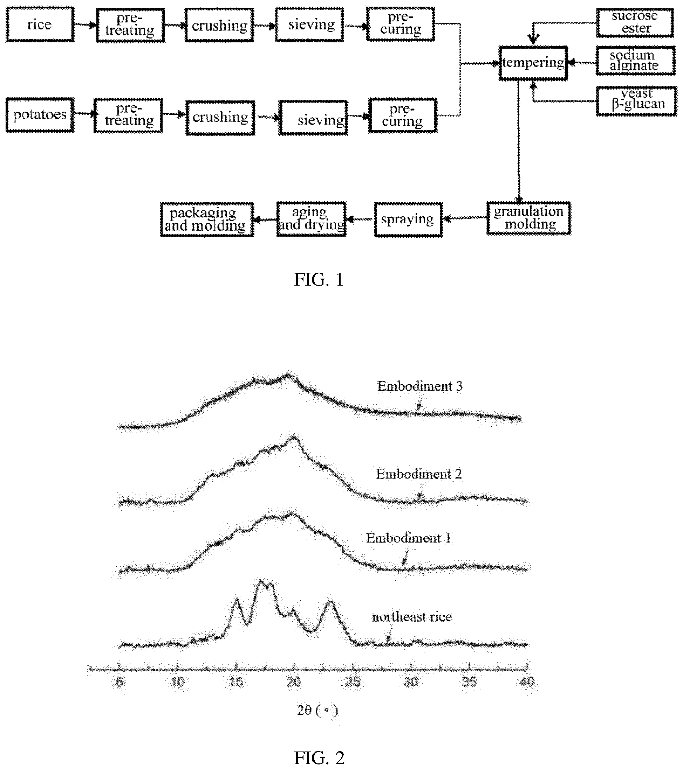

A process flow according to present disclosure can be referred to FIG. 1. The embodiments of the present disclosure are described below.

### Example 1

2700g of rice and 300g of potato whole powder were weighed accurately. The rice was soaked for 1h. The soaked rice was tempered and then pre-cured by extruding at a low-temperature (35°C in a section I, 45°C in a section II, 55°C in a section III, 60°C in a section IV and 70°C in a section V). The potato whole powder was size-mixed, and then pre-cured by cooking at a cooking temperature of 50°C for a cooking time of 3min. The rice powder and potato whole powder were mixed and tempered, 3g of sucrose ester, 0.3g of yeast β-glucan, and 7.5g of sodium alginate were prepared as a solution, and the solution was added into the pre-cured mixture of the potato whole powder and rice powder, until a water content of the materials reached 20%. The materials were fed into a twin-screw extruder for molding and granulating, in which working temperatures of cavities of respective sections of the twin-screw extruder were set as follows: 50°C in the section I, 80°C in the section II, 120°C in the section III, 110°C in the section IV, and 30°C in the section V, a screw rotation speed was 240 rpm, and the materials were extruded through a die having a circular molding hole diameter of 2mm, so as to preliminarily obtain artificial rice. Then, a prepared 1% sodium alginate solution was sprayed on surfaces of the nutritional artificial rice grains with a surface sprayer, and after drying at room temperature (25°C), potato-based nutritional artificial rice was obtained. The potato-based nutritional artificial rice was then classified and packaged.

### Example 2

2400g of rice and 600g of potato whole powder were weighed accurately. The rice was soaked for 2h. The soaked rice was tempered and then pre-cured by extruding at a low-temperature (35°C in the section I, 45°C in the section II, 55°C in the section III, 65°C in the section IV, and 75°C in the section V). The potato whole powder was size-mixed, and pre-cured by cooking at a cooking temperature of 50°C for a cooking time of 3min. The rice powder and potato whole powder were mixed and tempered, 13.5g of sucrose ester, 0.9g of yeast β-glucan, and 15g of sodium alginate were prepared as a solution and then added into the pre-cured mixture of the potato whole powder and rice powder, until a water content of the materials reached 25%; the material is fed into a twin-screw extruder for molding and granulating, and the working temperatures of the cavities of the respective sections of the twin-screw extruder were set as follows: 55°C in the section I, 90°C in the section II, 130°C in the section III, 115°C in the section IV, 35°C in the section V, a screw rotation speed was 260 rpm, and the materials were extruded through a die having a circular molding hole diameter of 3mm, so as to preliminarily obtain artificial rice. The prepared 1% sodium alginate solution was sprayed on surfaces of the nutritional artificial rice grains with a surface sprayer, and after drying at room temperature (25°C), the potato-based nutritional artificial rice was obtained. The obtained potato-based nutritional artificial rice was classified and packaged.

### Example 3

2100g of the rice and 900g of the potato whole powder were weighed accurately. The rice was soaked for 3h. The soaked rice was tempered and then pre-cured by extruding at a low-temperature (40°C in the section I, 50°C in the section II, 60°C in the section III, 70°C in the section IV, and 80°C in the section V). The potato whole powder was size-mixed and pre-cured by cooking at a cooking temperature of 60°C for a cooking time of 4min. After the rice powder and potato whole powder are mixed and tempered, 22.5g of sucrose ester, 0.5g of yeast β-glucan, and 30g of sodium alginate were prepared into solution and added to the pre-cured mixture of the potato whole powder and rice powder, until a water content of the materials reached 30%. The materials were fed into a twin-screw extruder for molding and granulating, in which the working temperatures of cavities of respective sections of the twin-screw extruder were set as follows: 60°C in the section I, 100°C in the section II, 140°C in the section III, 120°C in the section IV, 40°C in the section V, a screw rotation speed was 280 rpm, and the materials were extruded through a die having a circular molding hole diameter of 4mm, so as to preliminarily obtain artificial rice. Then, the prepared 1% sodium alginate solution was sprayed on surfaces of nutritional artificial rice grains with a surface sprayer, and after drying at room temperature (25°C), potato-based nutritional artificial rice was obtained. The obtained potato-based nutritional artificial rice was classified and packaged.

The potato-based nutritional artificial rice formulas according to the present disclosure and the raw materials of the preparation methods thereof are shown in Table 1.

**Table 1: Raw material formulas of the potato-based nutritional artificial rice**

| Sample | Rice ( % ) | Potato whole powder ( % ) | Yeast β-glucan ( % ) | Sodium alginate ( % ) | Sucrose ester ( % ) |
|---|---|---|---|---|---|
| Natural Rice | 100 | 0 | 0 | 0 | 0 |
| Example 1 | 90 | 10 | 0.01 | 0.25 | 0.1 |
| Example 2 | 80 | 20 | 0.03 | 0.5 | 0.45 |
| Example 3 | 70 | 30 | 0.05 | 1 | 0.75 |

Gelatinization characteristics of the potato-based nutritional artificial rice prepared according to the present disclosure are shown in Table 2.

**Table 2 The gelatinization characteristics of the potato-based nutritional artificial rice**

| Example | Peak viscosity | Minimum viscosity | Final viscosity | Disintegration value | Setback value | Gelatinization temperature |
|---|---|---|---|---|---|---|
| Natural Rice | 3793.1±49.3 | 2466.5±35.7 | 3709.7±50.6 | 1326.6±40.2 | 1243.2±42.3 | 74.38±0.11 |
| Example 1 | 3524.5±45.5 | 2119.4±40.6 | 3208.7±47.1 | 1405.1±42.6 | 1089.3±41.6 | 75.66±0.48 |
| Example 2 | 3350.2±43.9 | 1907.6±39.8 | 2887.1±49.5 | 1442.6±41.3 | 979.5±42.5 | 75.81±0.49 |
| Example 3 | 3081.6±46.7 | 1546.2±41.3 | 2489.3±46.8 | 1535.4±43.5 | 943.1±44.8 | 76.49±0.30 |

It can be seen from the Table 2 that the peak viscosities of the anti-regeneration nutritional artificial rice gradually decrease, because a molecular rearrangement of the potato whole powder and the rice powder molecules during the extrusion process and intermolecular interactions within the starch granules are reduced. A formation degree of the anti-regeneration nutritional artificial rice is higher, which indicates that the sucrose ester has a better regulation effect on the formation of the nutritional artificial rice. In addition, the nutritional artificial rice exhibits a lower peak viscosity during the gelatinization process; the minimum viscosities of the nutritional artificial rice also gradually decrease, which indicates that the nutritional artificial rice has a reduced shear resistance. The final viscosity is decreased, and thus amylose molecules has a reduced capability of rearrangement and retrogradation during the cooling process of the artificial rice. In this regard, the anti-regeneration ability of the nutritional artificial rice is improved, and the cooked rice can still maintain a good rice quality after a short-term storage.

FIG. 2 illustrates crystallization characteristics of the anti-regeneration nutritional artificial rice. The X-ray diffraction patterns of the natural rice powder and the nutritional artificial rice are shown in FIG. 2. The natural rice powder has diffraction peaks at 15.0°, 17.0°, 18.0°, and 23.0°, which are typical A-type characteristic peaks. Comparing the XRD patterns of the natural rice and the artificial rice, it can be found that the rice powder subjected to extruding has a significantly changed X-ray diffraction pattern, and intensities of the characteristic crystalline peaks are lowered, indicating a crystal structure damage of the starch granules. Under the effects of high temperature, high pressure, high shear and friction, a degree of lattice ordering of the anti-retrogradation artificial rice decreases, resulting in an increase in amorphous area, and the "A" type characteristic peaks of the starch still exist. When observing the XRD patterns of the cases where nutrients are added, it can be seen that a large number of diffraction peaks disappear, the starch crystal form changes to a "V" type crystal structure, the artificial rice granules are gradually transformed from a polycrystalline granule structure to an amorphous granule structure, and nutrients are combined with starch molecules to affect crystallinity of the starch.

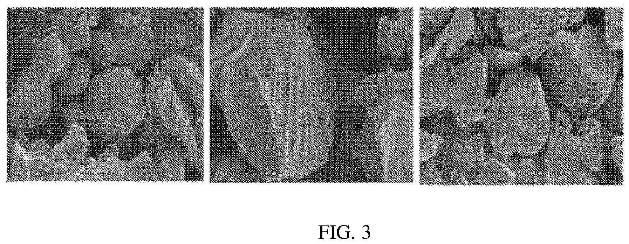

A scanning electron microscope image of the potato-based nutritional artificial rice formula prepared according to the present disclosure and the preparation method thereof are shown in FIG. 3. The nutritional artificial rice, in which the potato whole powder is added, has granules in irregular shape. As for the nutritional artificial rice prepared by the method according to the present disclosure, the morphological characteristics of the rice granules have changed significantly and are in a rock shape having sharp edges and corners. The reason is in that the original rice crystal structure disappears under the extruding and shearing effects of the twin-screw and the strong friction between the material and the screw and barrel, and the starch molecules are partially degraded and bonded to each other due to gelatinization and high pressure. Comparing the nutritional artificial rice added with different amounts of sucrose ester, sodium alginate and yeast β-glucan, it can be found that the starch granules are transformed from a compact, large and regular cohesive form to a broken and loose form, and the structure is characterized in that a barrier is established between the starch molecules, so that the artificial rice has a loose starch microstructure.

**Table 3 Color values of the natural rice and the potato-based nutritional artificial rice**

| Sample | L | a | b | ΔE | Whiteness |
|---|---|---|---|---|---|
| Natural Rice | 95.07+0.03^{a} | -0.57±0.03^{b} | 3.801±0.01^{d} | 92.87±0.04^{a} | 83.65±0.04^{a} |
| Example 1 | 89.61±0.01^{b} | -0.3±0.00^{a} | 5.97±0.01^{b} | 87.55±0.02^{b} | 71.71±0.01^{b} |
| Example 2 | 85.45±0.33^{d} | -0.56±0.01^{b} | 7.04±0.01^{c} | 83.69±0.01^{d} | 64.32±0.35^{c} |
| Example3 | 88.88±0.01^{c} | -0.32±0.01^{a} | 10.4±0.02^{a} | 87.26±0.01^{c} | 57.68±0.04^{d} |

Note: different letters in a same column indicate a significant difference (P <0.05). L^{∗} (+L is a brightness direction, -L is a darkness direction) and a^{∗} (+a is a red direction, -a is a green direction), b^{∗} (+b is a yellow direction and -b is a blue direction), and a total color difference (ΔE). L values from 0 to 100 indicate that the brightness varies from dark to bright, a value and b value represent redness and yellowness, respectively, where a higher a value means a redder sample, and a higher b value means a yellower sample.

Table 3 shows the color values of the natural rice powder and potato-based nutritional artificial rice. The color of the rice is an important indicator to directly reflect degrees of chemical reactions of components such as the starch and protein in the rice and the degree of the starch degradation. The color of the starch directly affects people's acceptance to the product. The color of the nutritional artificial rice is measured with a color difference meter. Both the brightness and whiteness of the natural rice powder present good color and luster. The artificial rice has a relatively dark color, reduced green and yellow values, and a reduced total color difference. The color of the artificial rice is slightly darker than that of the natural rice powder, i.e., having a lower brightness. The high temperature and high shearing force of the extrusion and cooking accelerate Maillard reactions, caramelization reactions, degradation of pigment and hydrolysis reactions, making the color of the nutritional artificial rice darker.

**Table 4 Sensory evaluations on the natural rice and the potato-based nutritional artificial rice**

| Sample | Scent ( 20 ) | Appearance structure ( 20 ) | Palatability ( 30 ) | Taste ( 25 ) | Cold rice texture ( 5 ) |
|---|---|---|---|---|---|
| Natural Rice | 18 | 17 | 25 | 22 | 4 |
| Example 1 | 17 | 18 | 28 | 24 | 4 |
| Example 2 | 16 | 17 | 27 | 22 | 4 |
| Example 3 | 19 | 16 | 28 | 23 | 3 |

The sensory evaluations on the natural rice powder and the potato-based nutritional artificial rice are listed in Table 4. Ten graduate students in the laboratory were selected as sensory evaluators. These evaluators were trained to perform the sensory evaluations on the artificial rice. The sensory evaluations include comprehensive indexes for comprehensively evaluating the quality of the potato-based artificial rice. If a content of the potato powder is too high, the color of the nutritional artificial rice will become dark yellow, which is less likely to be well accepted by consumers. In addition, if the content of the potato powder is too high, the steamed rice will become too flaccid and have poor taste, and people may less likely to accept it due to the strong scent of the potato in the nutritional artificial rice. If the content of the potato powder is too low, sensory changes are not obvious. Therefore, the potato powder should be added in an appropriate amount.

## Claims

1. A potato-based nutritional artificial rice formula, **characterized in that**, the artificial rice formula comprises:
70-90% of rice powder;
10-30% of potato whole powder;
0.1-1% of sucrose ester;
0.01- 0.1% of yeast β-glucan; and
0.1% -1% of sodium alginate.

2. A preparation method of potato-based nutritional artificial rice, the potato-based nutritional artificial rice having the potato-based nutritional artificial rice formula according to claim 1, the preparation method is **characterized in** comprising the following steps:
(1) sequentially pre-treating, crushing, sieving, and pre-curing rice;
(2) sequentially pre-treating, crushing, sieving, and pre-curing potatoes;
(3) tempering the pre-cured rice and potatoes with sodium alginate, sucrose ester and yeast β-glucan, to obtain tempered mixture powder; and
(4) sequentially granulation molding, spraying, drying, and finally packaging the tempered mixture powder.

3. The preparation method of potato-based nutritional artificial rice according to claim 2, **characterized in** comprising the following steps:
(1) pretreatment of the rice: processing the rice by washing, removing impurities and soaking, weighing the processed rice and soaking at room temperature for 0.5h to 4h, drying and crushing the soaked rice, and sieving through an 80-100 mesh sieve to obtain rice powder;
(2) pretreatment of the potatoes: processing the potatoes by peeling, beating, and drying, then crushing the processed potatoes and sieving through an 80-150 mesh sieve to obtain potato whole powder;
(3) pre-curing of raw materials: pre-curing the rice powder and the potato whole powder that are obtained by the pretreatments;
(4) tempering: adding the pre-cured rice powder and potato whole powder into a mixer to obtain mixture powder; adding sodium alginate, sucrose ester and yeast β-glucan, and tempering the mixture powder by adding distilled water to obtain a mixture material; and adjusting a water content of the mixture material to 20-40%;
(5) granulation molding: feeding the tempered mixture material into a twin-screw extruder via a feeder, wherein the twin-screw extruder has five heating sections, a screw of the twin-screw extruder has a length-to-diameter ratio of 16:1-28:1, working temperatures of cavities of respective sections of the twin-screw extruder are as follows: 50-70°C in a section I, 80-100°C in a section II, 120-140°C in a section III, 110-120°C in a section IV, and 25-40°C in a section V, and a rotation speed of the screw is 200-300 rpm; conveying, extruding, and curing the mixture material through the twin-screw extruder to form gel granules, and extruding and molding the gel granules through a die having a circular molding hole diameter of 1-6 mm, to obtain artificial rice preliminarily;
(6) spraying: spraying sodium alginate on surfaces of the artificial rice at an exit of the extruder;
(7) aging and drying: adjusting the water content of the artificial rice to 8-15% by naturally drying the cut and molded artificial rice at 25°C ; and
(8) packaging: weighing and packaging the dried and polished artificial rice.

4. The preparation method of potato-based nutritional artificial rice according to claim 2, **characterized in that**, the pre-curing of the rice is performed by placing rice powder into a twin-screw extruder and adopting a low-temperature extrusion method, wherein working temperatures of cavities of respective sections of the twin-screw extruder are: 30-40°C in a section I, 40-50°C in a section II, 50-60°C in a section III, 60-70°C in a section IV, and 70-80°C in a section V, and a rotation speed is 200-300 rpm, and wherein a water content of the rice powder is in a range of 25-45%; and
the pre-curing of the potatoes is performed by cooking whole potato powder at a low temperature, wherein the low temperature of the cooking is 35-60°C, and a cooking time is 1-15min.

5. The preparation method of potato-based nutritional artificial rice according to claim 3, **characterized in that**, in the step (4), the sucrose ester, the yeast β-glucan, and the sodium alginate are added in the following ratios: the sucrose ester 0.1-1%, the yeast β-glucan 0.01-0.1%, and the sodium alginate 0.1% -1%.

6. The preparation method of potato-based nutritional artificial rice according to claim 3, **characterized in that**, in the step (6), a mass fraction of the sodium alginate used for spraying is 1-10%, and an amount used for spraying is 20%- 40% of a total material weight.

## Patentansprüche

1. Formel für künstlichen Nährreis auf Kartoffelbasis, **dadurch gekennzeichnet, dass** die Formel für künstlichen Reis umfasst:
70-90% Reispulver;
10-30 % Kartoffelvollpulver;
0,1-1 % Saccharoseester;
0,01-0,1 % Hefe-β-Glucan; und
0,1 % -1 % Natriumalginat.

2. Herstellungsverfahren für künstlichen Nährreis auf Kartoffelbasis, wobei der künstliche Nährreis auf Kartoffelbasis die Formel für künstlichen Nährreis auf Kartoffelbasis nach Anspruch 1 aufweist, wobei das Herstellungsverfahren **dadurch gekennzeichnet ist, dass** es die folgenden Schritte umfasst:
(1) in Abfolge Vorbehandeln, Zerkleinern, Sieben und Vorhärten von Reis;
(2) in Abfolge Vorbehandeln, Zerkleinern, Sieben und Vorhärten von Kartoffeln;
(3) Temperieren von vorgehärtetem Reis und der Kartoffeln mit Natriumalginat, Saccharoseester und Hefe-β-Glucan, um ein Pulver einer temperierten Mischung zu erhalten; und
(4) in Abfolge Granulationsformen, Sprühen, Trocknen und schließlich Verpacken des Pulvers der temperierten Mischung.

3. Herstellungsverfahren für künstlichen Nährreis auf Kartoffelbasis nach Anspruch 2, **dadurch gekennzeichnet, dass** es die folgenden Schritte umfasst:
(1) Vorbehandlung des Reises: Verarbeiten des Reises durch Waschen, Entfernen von Verunreinigungen und Einweichen, Wiegen des verarbeiteten Reises und Einweichen bei Raumtemperatur für 0,5 Stunden bis 4 Stunden, Trocknen und Zerkleinern des eingeweichten Reises und Sieben durch ein 80-100-maschiges Sieb, um Reispulver zu erhalten;
(2) Vorbehandlung der Kartoffeln: Verarbeiten der Kartoffeln durch Schälen, Schlagen und Trocknen, dann Zerkleinern der verarbeiteten Kartoffeln und Sieben durch ein 80-150-maschiges Sieb, um Kartoffelvollpulver zu erhalten;
(3) Vorhärten von Rohstoffen: Vorhärten des Reispulvers und des Kartoffelvollpulvers, die durch die Vorbehandlungen erhalten wurden;
(4) Temperieren: Zugeben des vorgehärteten Reispulvers und des Kartoffelvollpulvers in einen Mischer, um Mischungspulver zu erhalten; Zugeben von Natriumalginat, Saccharoseester und Hefe-β-Glucan und Temperieren des Mischungspulvers durch Zugeben von destilliertem Wasser, um ein Mischungsmaterial zu erhalten; und Einstellen eines Wassergehalts des Mischungsmaterials auf 20-40%;
(5) Granulationsformen: Zuführen des temperierten Mischungsmaterials in einen Doppelschneckenextruder über eine Zufuhr, wobei der Doppelschneckenextruder fünf Heizzonen aufweist, eine Schnecke des Doppelschneckenextruders ein Länge-zu-Durchmesser-Verhältnis von 16:1 bis 28:1 aufweist, Arbeitstemperaturen der Hohlräume jeweiliger Zonen des Doppelschneckenextruders wie folgt sind: 50-70°C in einer Zone I, 80-100°C in einer Zone II, 120-140°C in einer Zone III ,110-120°C in einer Zone IV und 25-40°C in einer Zone V, und eine Drehzahl der Schnecke 200-300 U/min beträgt; Fördern, Extrudieren und Härten des Mischungsmaterials durch den Doppelschneckenextruder, um Gelkörner zu bilden, und Extrudieren und Formen der Gelkörner durch eine Düse mit einem kreisförmigen Formlochdurchmesser von 1-6 mm, um vorläufig künstlichen Reis zu erhalten;
(6) Sprühen: Sprühen von Natriumalginat auf Oberflächen des künstlichen Reises an einem Ausgang des Extruders;
(7) Altern und Trocknen: Einstellen des Wassergehalts des künstlichen Reises auf 8-15 % durch natürliches Trocknen des geschnittenen und geformten künstlichen Reises bei 25 °C; und
(8) Verpacken: Wiegen und Verpacken des getrockneten und polierten künstlichen Reises.

4. Herstellungsverfahren für künstlichen Nährreis auf Kartoffelbasis nach Anspruch 2, **dadurch gekennzeichnet, dass** das Vorhärten des Reises durch Platzieren von Reispulver in einen Doppelschneckenextruder und Anwenden eines Niedertemperatur-Extrusionsverfahrens durchgeführt wird, wobei die Arbeitstemperaturen der Hohlräume jeweiliger Zonen des Doppelschneckenextruders sind: 30-40°C in Zone I, 40-50°C in Zone II, 50-60°C in Zone III, 60-70°C in Zone IV und 70-80°C in Zone V und eine Drehzahl 200-300 U/min beträgt, und wobei ein Wassergehalt des Reispulvers in einem Bereich von 25-45 % liegt; und
das Vorhärten der Kartoffeln durch Kochen von Kartoffelvollpulver bei einer niedrigen Temperatur durchgeführt, wobei die niedrige Temperatur des Kochens 35-60°C beträgt und eine Kochzeit 1-15 Minuten beträgt.

5. Herstellungsverfahren für künstlichen Nährreis auf Kartoffelbasis nach Anspruch 3, **dadurch gekennzeichnet, dass** in Schritt (4) der Saccharoseester, das Hefe-β-Glucan und das Natriumalginat in den folgenden Verhältnissen zugegeben werden: Saccharoseester 0,1-1 %, Hefe-β-Glucan 0,01-0,1 % und Natriumalginat 0,1%-1 %.

6. Herstellungsverfahren für künstlichen Nährreis auf Kartoffelbasis nach Anspruch 3, **dadurch gekennzeichnet, dass** in Schritt (6) ein Massenanteil des zum Sprühen verwendeten Natriumalginats 1-10 % beträgt und eine zum Sprühen verwendete Menge 20%-40 % des gesamten Materialgewichts beträgt.

## Revendications

1. Formule de riz artificiel nutritionnel à base de pomme de terre, **caractérisée en ce que** la formule de riz artificiel comprend :
de 70 à 90 % de poudre de riz ;
de 10 à 30 % de poudre de pomme de terre entière ;
de 0,1 à 1 % d'ester de saccharose ;
de 0,01 à 0,1 % de β-glucane de levure ; et
de 0,1 % à 1 % d'alginate de sodium.

2. Procédé de préparation de riz artificiel nutritionnel à base de pomme de terre, le riz artificiel nutritionnel à base de pomme de terre présentant la formule de riz artificiel nutritionnel à base de pomme de terre selon la revendication 1, le procédé de préparation est **caractérisé en ce qu'**il comprend les étapes suivantes :
(1) prétraitement, écrasement, tamisage et précuisson successifs du riz ;
(2) prétraitement, écrasement, tamisage et précuisson successifs des pommes de terre ;
(3) tempérage du riz et des pommes de terre précuits avec de l'alginate de sodium, de l'ester de saccharose et du β-glucane de levure, pour obtenir une poudre de mélange tempérée ; et
(4) moulage de granulation, pulvérisation, séchage et pour finir emballage successifs de la poudre de mélange tempérée.

3. Procédé de préparation de riz artificiel nutritionnel à base de pomme de terre selon la revendication 2, **caractérisé en ce qu'**il comprend les étapes suivantes :
(1) prétraitement du riz : traiter le riz par nettoyage, élimination des impuretés et trempage, peser le riz traité et faire tremper à température ambiante pendant 0,5 h à 4 h, faire sécher et écraser le riz trempé, et tamiser à travers un tamis à 80 à 100 mailles pour obtenir de la poudre de riz ;
(2) prétraitement des pommes de terre : traiter les pommes de terre par épluchage, battage et séchage, écraser ensuite les pommes de terre traitées et tamiser à travers un tamis à 80 à 150 mailles pour obtenir de la poudre de pomme de terre entière ;
(3) précuisson des matières premières : précuire la poudre de riz et la poudre de pomme de terre entière qui sont obtenues par les prétraitements ;
(4) tempérage : ajouter la poudre de riz et la poudre de pomme de terre entière précuites dans un batteur pour obtenir de la poudre de mélange ; ajouter de l'alginate de sodium, de l'ester de saccharose et du β-glucane de levure, et tempérer la poudre de mélange en ajoutant de l'eau distillée pour obtenir une matière de mélange ; et ajuster une teneur en eau de la matière de mélange à 20 à 40 % ;
(5) moulage de granulation : mettre la matière de mélange tempérée dans une extrudeuse à deux vis par l'intermédiaire d'un dispositif d'alimentation, dans lequel l'extrudeuse à deux vis présente cinq sections de chauffage, une vis de l'extrudeuse à deux vis présente un rapport longueur-diamètre de 16:1 à 28:1, des températures de travail de cavités de sections respectives de l'extrudeuse à deux vis sont les suivantes : de 50 à 70 °C dans une section I, de 80 à 100 °C dans une section II, de 120 à 140 °C dans une section III, de 110 à 120 °C dans une section IV et de 25 à 40 °C dans une section V, et une vitesse de rotation de la vis est de 200 à 300 tr/min ; transporter, extruder et faire cuire la matière de mélange à travers l'extrudeuse à deux vis pour former des granulés de gel, et extruder et mouler les granulés de gel dans un moule présentant un diamètre de trou de moulage circulaire de 1 à 6 mm, pour obtenir du riz artificiel préliminairement ;
(6) pulvérisation : pulvériser de l'alginate de sodium sur des surfaces du riz artificiel au niveau d'une sortie de l'extrudeuse ;
(7) vieillissement et séchage : ajuster la teneur en eau du riz artificiel à 8 à 15 % en faisant sécher naturellement le riz artificiel coupé et moulé à 25 °C ; et
(8) emballage : peser et emballer le riz artificiel séché et poli.

4. Procédé de préparation de riz artificiel nutritionnel à base de pomme de terre selon la revendication 2, **caractérisé en ce que** la précuisson du riz est effectuée en plaçant de la poudre de riz dans une extrudeuse à deux vis et en adoptant un procédé d'extrusion à basse température, dans lequel des températures de travail de cavités de sections respectives de l'extrudeuse à deux vis sont : de 30 à 40 °C dans une section I, de 40 à 50 °C dans une section II, de 50 à 60 °C dans une section III, de 60 à 70 °C dans une section IV et de 70 à 80 °C dans une section V, et une vitesse de rotation est de 200 à 300 tr/min, et dans lequel une teneur en eau de la poudre de riz est dans une plage de 25 à 45 % ; et
la précuisson des pommes de terre est effectuée en faisant cuire de la poudre de pomme de terre entière à faible température, dans lequel la faible température de la cuisson est de 35 à 60 °C, et une durée de cuisson est de 1 à 15 minutes.

5. Procédé de préparation de riz artificiel nutritionnel à base de pomme de terre selon la revendication 3, **caractérisé en ce que**, à l'étape (4), l'ester de saccharose, le β-glucane de levure et l'alginate de sodium sont ajoutés dans les rapports suivants : l'ester de saccharose de 0,1 à 1 %, le β-glucane de levure de 0,01 à 0,1 % et l'alginate de sodium de 0,1 % à 1 %.

6. Procédé de préparation de riz artificiel nutritionnel à base de pomme de terre selon la revendication 3, **caractérisé en ce que**, à l'étape (6), une fraction massique de l'alginate de sodium utilisé pour la pulvérisation est de 1 à 10 %, et une quantité utilisée pour la pulvérisation est de 20 % à 40 % d'un poids total de la matière.
